# EUROPÄISCHE PATENTSCHRIFT

(11) **EP 1 127 652 B1**
(45) Veröffentlichungstag und Bekanntmachung des Hinweises auf die Patenterteilung: **24.09.2003**
(21) Anmeldenummer: 01102136.7
(22) Anmeldetag: 01.02.2001
(51) Int. Cl.: B23K 26/42, B23K 26/14, F02F 1/20

(54) **Verfahren und Vorrichtung zum Bearbeiten einer Innenfläche einer zylinderförmigen Bohrung mittels Laser und gekühlter Umlenkoptik**
Process and Apparatus for treating an inner surface of a cylindrical bore by means of a laser and a cooled mirror
Procédé et appareil pour traiter une surface intérieure d'un orifice cylindrique au moyen d'un laser et d'un miroir refroidi

(30) Priorität: 26.02.2000 DE 10009123
(43) Veröffentlichungstag der Anmeldung: 29.08.2001
(73) Patentinhaber: Volkswagen Aktiengesellschaft, 38436 Wolfsburg (DE)
(72) Erfinder: Heinemann, Rolf, Dipl.-Ing., 38165 Lehre (DE); Heider, Thomas, Dipl.-Ing., 38448 Wolfsburg (DE); Färber, Klaus, Dipl.-Ing., 38158 Gifhorn (DE)

(56) Entgegenhaltungen:
- EP-A- 0 837 152
- EP-A- 0 876 870
- EP-A- 0 950 461
- US-A- 3 696 230
- US-A- 5 179 260

## Beschreibung

Die Erfindung betrifft ein Verfahren zum Bearbeiten einer Innenfläche einer eine Zylinderlängsachse aufweisenden zylinderförmigen Bohrung eines Bauteils, insbesondere eines Aluminium-Zylinderkurbelgehäuses einer Brennkraftmaschine gemäß dem Oberbegriff des Anspruchs 1. Die Erfindung betrifft ferner eine Vorrichtung zum Bearbeiten einer Innenfläche einer eine Zylinderlängsachse aufweisenden zylinderförmigen Bohrung eines Bauteils, insbesondere eines Aluminium-Zylinderkurbelgehäuses einer Brennkraftmaschine gemäß dem Oberbegriff des Anspruchs 5 siehe, für die beiden Ansprüche, z.B. E-P-A-0 950 461.

Die für Zylinderkurbelgehäuse vorwiegend eingesetzten untereutektischen Aluminium-Silizium-Legierungen sind aufgrund des zu geringen Anteils der verschleißfesten Siliziumphase für die tribologische Beanspruchung des Systems Kolben-Kolbenring-Zylinderlaufbahn ungeeignet. Übereutektische Legierungen, z.B. die Legierung AlSil₇Cu₄Mg, besitzen einen ausreichenden Anteil an Siliziumkristalliten. Dieser harte, verschleißbeständige Gefügebestandteil wird durch chemische und/oder mechanische Bearbeitungsstufen gegenüber der aus dem Aluminiummischkristall bestehenden Matrix hervorgehoben und bildet einen erforderlichen Tragflächenanteil. Nachteilig wirkt sich jedoch die gegenüber den untereutektischen und naheutektischen Legierungen mangelhafte Vergießbarkeit, die schlechte Bearbeitbarkeit und die hohen Kosten für diese Legierung aus.

Eine Möglichkeit zur Umgehung dieses Nachteils ist das Eingießen von Laufbuchsen aus verschleißbeständigem Material wie z.B. Grauguß- und übereutektischen Aluminiumlegierungen. Problematisch ist hier jedoch die Verbindung zwischen Buchse und Umguß, welcher alleine durch eine mechanische Verzahnung gewährleistet wird. Durch Einsatz eines porösen keramischen Buchsenwerkstoffs ist es möglich, beim Gießprozeß diesen zu infiltrieren und zu einer stofflichen Verbindung zu gelangen. Dazu ist eine langsame Formfüllung sowie die Anwendung von hohem Druck erforderlich, was die Wirtschaftlichkeit des Verfahrens erheblich herabsetzt.

Alternativ werden unter- und naheutektischen Legierungen als galvanische Beschichtungen direkt auf die Laufbahnen aufgebracht. Dies ist jedoch teuer und tribochemisch nur ungenügend beständig. Eine weitere Alternative bilden thermische Spritzschichten, welche ebenfalls direkt auf die Laufflächen appliziert werden. Die Haftfestigkeit dieser Schichten ist jedoch aufgrund einer alleinigen mikromechanischen Verklammerung nur ungenügend.

Es wurde daher bereits vorgeschlagen, die Oberflächenmodifikationen Umschmelzen, Einlegieren, Dispergieren und Beschichten durch den Einsatz eines Lasers auszuführen, wie beispielsweise aus der DE 196 43 029 A1 oder der EP 0 950 461 A2 bekannt. Hierbei wird ein zu bearbeitender Hohlkörper, welcher zylinderförmig mit einer rotationssymmetrischen Zylinderachse ausgebildet ist, ortsfest gehalten und eine Umlenkoptik für den Laserstrahl sowie eine Zuführung für Legierungspulver rotiert und gleichzeitig entlang der Zylinderachse vorgeschoben. Der auf die Oberfläche des zu bearbeitenden Körpers fallende Laserstrahl erzeugt an der Zylinderwand im Bereich einer Kolbenlauffläche ein Schmelzbad, in welches hier vorzugsweise Silizium oder andere Hartstoffe eingebracht werden, um eine verschleißfeste, tribologisch geeignete Lauffläche zu erhalten.

In der EP 0 950 461 A2 wird eine Vorrichtung zur Laserbearbeitung einer Innenfläche vorgeschlagen, bei der mittels Leitungen in einem Sondenkopf ein Crossjet eines zusätzlichen Spülgases erzeugt wird, welcher senkrecht zum aus dem Sondenkopf austretenden Sondenkopf strömt und den Laserstrahl kreuzt, so daß mittels einer Art Strömungsvorhang die Umlenkoptik im Sondenkopf vor Partikeln geschützt ist. Diese Anordnung hat jedoch den Nachteil, daß Partikel mit größerer kinetischer Energie wegen der relativ kleinen Ausdehnung des Strömungsvorhangs in Bewegungsrichtung dieser Partikel ohne weiteres den schützenden Strömungsvorhang durchdringen und zur Umlenkoptik und insbesondere zum Umlenkspiegel vordringen können und zu einer entsprechenden Verschmutzung der Umlenkoptik führen. Ferner ist das zusätzliche Vorsehen eines Strömungskanals für den Crossjet im Sondenkopf aufwendig und kostenintensiv.

Der vorliegenden Erfindung liegt die Aufgabe zugrunde, ein Verfahren und eine Vorrichtung der obengenannten Art zur Verfügung zu stellen, welche bei einfacher Bauart eine Verschmutzung der Laseroptik wirksam verhindern und eine verbesserten Pulvereintrag oder Pulverauftrag an der Innenwandfläche erzielen.

Diese Aufgabe wird erfindungsgemäß durch ein Verfahren gemäß Anspruch 1 und durch eine Vorrichtung gemäß Ansprüch 5 gelöst. Vorteilhafte Ausgestaltungen der Erfindung sind in den abhängigen Ansprüchen angegeben.

Dazu ist es bei einem Verfahren der o.g. Art erfindungsgemäß vorgesehen, daß wenigstens ein Teil des Kühlmediums nach dem Kühlen des Umlenkspiegels als zusätzliches oder ausschließliches Spülmedium verwendet wird.

Dies hat den Vorteil, daß durch die Verwendung von Kühlmedium als Spülmedium, d.h. durch eine Reihenschaltung der Laseroptikkühlung und der Spülfluids, keine zusätzliche Fluidzuführung erforderlich ist und ggf. auf eine separate Zuführung von Spülmedium ganz verzichtet werden kann. Zusätzlich ist das Spülmedium vorgewärmt. Das der Kühlung entnommene Kühlmedium unterstützt darüber hinaus beim Austritt aus der Umlenkoptik als Trägermedium den Pulvereintrag bzw. Pulverauftrag an der zu bearbeitenden Innenwandfläche.

Eine entsprechende Injektorwirkung erzielt man dadurch, daß das als Spülmedium entnommene Kühlmedium ringförmig um den Laserstrahl und Im wesentlichen in Richtung Innenfläche ausgebracht wird.

Zweckmäßigerweise wird das entnommene Kühlmedium ringförmig in einem Ringspeicher um den Umlenkspiegel geführt, wobei als Kühlmedium beispielsweise ein Gas, insbesondere Luft, verwendet wird.

Bei einer Vorrichtung der o.g. Art ist es erfindungsgemäß vorgesehen, daß der Umlenkspiegel von einem Ringkanal umgeben ist, welcher an einer Austrittstelle des Laserstrahls aus der Umlenkoptik eine den Laserstrahl umgebende konische Öffnung aufweist, wobei eine fluidleitende Verbindung zwischen der Kühleinrichtung des Umlenkspiegels und dem Ringkanal derart vorgesehen ist, daß wenigstens ein Teil des Kühlmediums als Spülmedium für die Pulverzuführung aus der konischen Öffnung des Ringkanals austritt.

Dies hat den Vorteil, daß durch die mittels der konischen Öffnung aus dem Ringkanal ringförmig um den Laserstrahl erfolgende Fluidströmung ein Eindringen von Partikeln in die Umlenkoptik und damit eine Verschmutzung der Laseroptik und insbesondere des Umlenkspiegels durch eine entsprechende Injektorwirkung wirksam verhindert. Hierbei ist durch die Verwendung von Kühlmedium als Spülmedium, d.h. durch eine Reihenschaltung der Laseroptikkühlung und der Spülfluids, keine zusätzliche Fluidzuführung erforderlich und es kann ggf. auf eine separate Zuführung von Spülmedium ganz verzichtet werden. Zusätzlich ist das Spülmedium vorgewärmt. Der Ringkanal wirkt als Speicher bzw. Ringspeicher, dem über die konische Öffnung Spülmedium zum Spülen im Bereich des Austritts des Laserstrahls aus der Umlenkoptik entnommen werden kann. Das der Kühlung entnommene Kühlmedium unterstützt darüber hinaus beim Austritt aus der konischen Öffnung als Trägermedium den Pulvereintrag bzw. Pulverauftrag an der zu bearbeitenden Innenwandfläche.

In einer bevorzugten Ausführungsform ist die konische Öffnung als ein- oder zweischaliger Rohrstutzen ausgebildet. Ferner ist es besonders bevorzugt, daß der Ringkanal derart angeordnet und ausgebildet ist, daß eine Mittelachse desselben zur Drehachse der Umlenkoptik parallel, insbesondere mit der Drehachse der Umlenkoptik fluchtend, ausgerichtet ist.

Für eine zusätzliche Spülung ist der Ringkanal mit einer Zuführung für Spülmedium verbunden. Das Kühlmedium ist beispielsweise ein Gas, insbesondere Luft.

Zweckmäßigerweise ist die konische Öffnung derart ausgebildet, daß sich diese von der Umlenkoptik ausgehend konisch verjüngt.

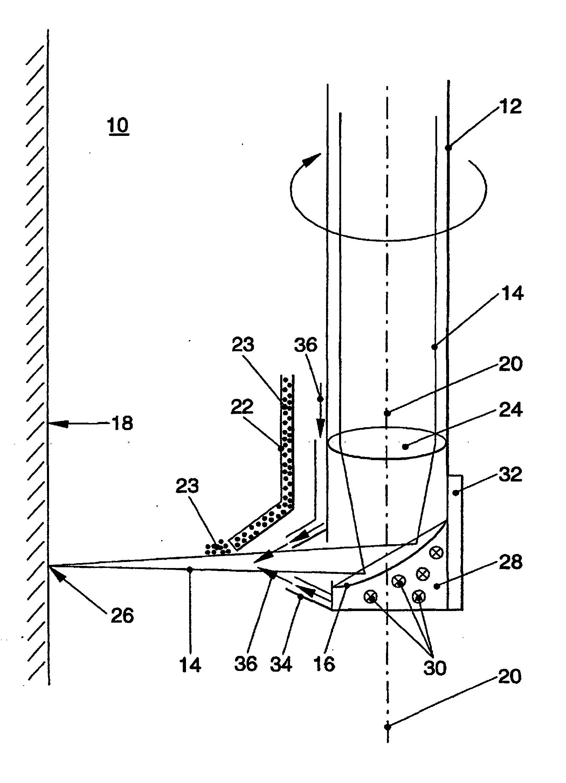

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnung. Diese zeigt in der einzigen Fig. eine bevorzugte Ausführungsform einer erfindungsgemäßen Vorrichtung in schematischer Schnittansicht.

Die einzige Fig. veranschaulicht eine in einer zylinderförmigen Bohrung 10 angeordnete Umlenkoptik 12, welche einen Laserstrahl 14 in die Bohrung 10 führt und mittels eines Umlenkspiegels 16 auf eine Innenfläche 18 der Bohrung 10 richtet. Mit 20 ist eine Umlenkoptiklängsachse der Umlenkoptik 12 bezeichnet, wobei diese Längsachse 20 mit einer Zylinderlängsachse der Bohrung 10 fluchtet. Sowohl die Bohrung 10 als auch ein wesentlicher Abschnitt der Umlenkoptik 12 sind rotationssymmetrisch um die Längsachse 20 ausgebildet.

In der Umlenkoptik 12 ist ferner eine Fokussierlinse 24 angeordnet. Nach Durchtritt des Laserstrahls 14 durch die Fokussierlinse 24 und Reflexion am Umlenkspiegel 16 trifft dieser auf die Innenfläche 18 der Bohrung 10, wobei die Fokussierlinse 24 derart angeordnet ist, daß sich ein Laserfokus 26 möglichst genau auf der Innenfläche 18 der Bohrung 10 befindet.

Mittels der in der Fig. dargestellten Anordnung erfolgt eine Oberflächenbehandlung der Innenfläche 18 der Bohrung 10 derart, daß der Laserstrahl 14 einen Abschnitt der Innenfläche 18 aufschmilzt, so daß ein Schmelzbad entsteht, und diesem Schmelzbad ein entsprechendes Legierungspulver zugeführt wird. Mit 22 ist eine entsprechende Vorrichtung zum Zuführen von Legierungspulver 23, ggf. unter Zuhilfenahme eines Schutzgasstromes, bezeichnet Je nach Intensität der Laserstrahles 14 wird nur eine Oberfläche der Innenfläche 18 aufgeschmolzen (Auftragsschweißen) oder eine vorbestimmte Eindringtiefe des Laserstrahles 14 in die Innenfläche 18 erzielt, so daß das Schmelzbad über eine vorbestimmte Strecke in die Innenfläche 18 hineinreicht (Auflegieren).

Die Bohrung 10 ist beispielsweise in einem ansonsten nicht näher dargestellten Aluminium-Zylinderkurbelgehäuse ausgebildet, wobei mittels der Laserbehandlung (Laser-Plasmabeschichtung) an der Zylinderwand 18 eine tribologisch geeignete Kolbenlauffläche mit entsprechend bzgl. reinem Aluminium höherer mechanischer Festigkeit hergestellt wird. Dabei wird beispielsweise eine Kolbenlauffläche mit Eintrag von Siliziumpulver hergestellt. Um eine entsprechende Fläche als Kolbenlauffläche herzustellen, muß der Laserstrahl 14 eine entsprechende Fläche an der Innenfläche 18 der Bohrung 10 überstreichen. Hierzu wird die Umlenkoptik 12 entsprechend gedreht, so daß der Laserstrahl 14 sukzessive andere Abschnitte der Innenfläche 18 der Bohrung 10 überstreicht. Zusätzlich zu der Drehung erfolgt ein entsprechender Vorschub der Umlenkoptik 12 in die Bohrung 10 hinein.

Der Umlenkspiegel 16 ist mit einer Kühleinrichtung 28 verbunden, welche quer von einem Kühlmedium 30, wie beispielsweise Luft, durchströmt ist und dadurch den Umlenkspiegel 16 kühlt. Darüber hinaus ist der Umlenkspiegel 16 von einem Ringspeicher 32 umgeben, welcher im Bereich eines Austritts des Laserstrahls 14 aus der Umlenkoptik 12 mit einer konischen Öffnung in Form eines Rohrstutzens 34 ausgebildet ist. Zwischen der Kühleinrichtung 28 und dem Ringspeicher 32 ist eine fluidleitende Öffnung derart ausgebildet, daß wenigstens ein Teil des Kühlmediums 30 in den Ringspeicher 32 überströmt.

Dieses Kühlmedium tritt dann aus dem Rohrstutzen 34 im wesentlichen in Richtung Innenfläche 18 aus und wirkt dadurch als Spülmedium 36, welches den Bereich des Austritts des Laserstrahls 14 aus der Umlenkoptik 12 von Partikeln aus der Laserbearbeitung freispült, so daß diese nicht in die Umlenkoptik 12 eindringen und diese verschmutzen können. Gleichzeitig unterstützt der Spülstrom aus dem Rohrstutzen 34 einen Pulvereintrag bzw. Pulverauftrag aus der Zuführvorrichtung in bzw. auf die Innenfläche 18. Dadurch kann einerseits der Aufwand für einen ggf. vorhandenen Schutzgasstrom für das Legierungspulver reduziert werden, da ein wesentlicher Teil der Transportarbeit für das Legierungspulver vom Spülmedium übernommen wird, und andererseits ist für das Spülen keine zusätzliche Spülmediumzufuhr erforderlich, da unmittelbar das Kühlmedium als Spülmedium 36 verwendet wird. Da dies nach der Kühlung des Umlenkspiegels 16 erfolgt, ist das Spülmedium 36 gleichzeitig vorgewärmt und behindert nicht ein Aufschmelzen des Legierungspulvers 23 durch den Laserstrahl 14 bereits vor dem Auftreffen auf die Innenfläche 18.

### BEZUGSZEICHENLISTE

- 10: zylinderförmige Bohrung
- 12: Umlenkoptik
- 14: Laserstrahl
- 16: Umlenkspiegel
- 18: Innenfläche
- 20: Umlenkoptiklängsachse
- 22: Vorrichtung zum Zuführen von Legierungspulver
- 23: Legierungspulver
- 24: Fokussierlinse
- 26: Laserfokus
- 28: Kühleinrichtung
- 30: Kühlmedium
- 32: Ringspeicher
- 34: Rohrstutzen
- 36: Spülmedium

## Patentansprüche

1. Verfahren zum Bearbeiten einer Innenfläche (18) einer eine Zylinderlängsachse aufweisenden zylinderförmigen Bohrung (10) eines Bauteils, insbesondere eines Aluminium-Zylinderkurbelgehäuses einer Brennkraftmaschine, wobei die Innenfläche (18) abschnittsweise mit einem Laserstrahl (14) aufgeschmolzen und in den aufgeschmolzenen Abschnitt ein Legierungspulver (23) eingebracht wird, welches von einem Trägermedium zur Innenfläche transportiert wird, wobei der Laserstrahl (14) mittels einer Umlenkoptik (12) in die Bohrung (10) geführt und mit einem Umlenkspiegel (16) auf die Innenfläche (18) gerichtet wird, wobei die Umlenkoptik (12) sowie eine Vorrichtung (22) zum Zuführen des Legierungspulvers (23) derart rotiert und in die Bohrung (10) vorgeschoben wird, dass ein vorbestimmter Bereich der Innenfläche (18) Bohrung (10) von dem Laserstrahl (14) uberstrichen wird, wobei ferner der Umlenkspiegel (16) von einem Kühlmedium (30) gekühlt wird, **dadurch gekennzeichnet, dass** wenigstens ein Teil des Kühlmediums (30) nach dem Kühlen des Umlenkspiegels (16) als zusätzliches oder ausschließliches Spülmedium (36) für die Pulverzuführung im wesentlichen in Richtung der Innenfläche (18) der Bohrung (10) ausgebracht oder verwendet wird.

2. Verfahren nach Anspruch 1, **dadurch gekennzeichnet, daß** das als Spülmedium entnommene Kühlmedium ringförmig um den Laserstrahl und im wesentlichen in Richtung Innenfläche ausgebracht wird.

3. Verfahren nach Anspruch 1 oder 2, **dadurch gekennzeichnet, daß** das entnommene Kühlmedium ringförmig in einem Ringspeicher um den Umlenkspiegel geführt wird.

4. Verfahren nach Anspruch 1 oder 2, **dadurch gekennzeichnet, daß** als Kühlmedium ein Gas, insbesondere Luft, verwendet wird.

5. Vorrichtung zum Bearbeiten einer Innenfläche (18) einer eine Zylinderlängsachse aufweisenden zylinderförmigen Bohrung (10) eines Bauteils, insbesondere eines Aluminium-Zylinderkurbelgehäuses einer Brennkraftmaschine, mit einer Pulverzuführung (22), einem einen Laserstrahl (14) abgebenden Laser, einer den Laserstrahl (14) in die Bohrung (10) führenden Umlenkoptik (12) und einem den Laserstrahl (14) auf die Innenfläche (18) richtenden Umlenkspiegel (16), welcher an einem vom Laser abgewandten Ende der Umlenkoptik (12) angeordnet ist, wobei die Umlenkoptik (12) um die Zylinderlängsachse als Drehachse (20) drehbar bzgl. der Bohrung (10) ausgebildet ist und der Umlenkspiegel (16) mit einer von einem Kühlmedium (30) durchströmten Kühleinrichtung (28) verbunden ist, **dadurch gekennzeichnet, daß** der Umlenkspiegel (16) von einem Ringkanal (32) umgeben ist, welcher an einer Austrittstelle des Laserstrahls (14) aus der Umlenkoptik (12) eine den Laserstrahl (14) umgebende konische Öffnung aufweist, wobei eine fluidleitende Verbindung zwischen der Kühleinrichtung (28) des Umlenkspiegels (16) und dem Ringkanal (32) derart vorgesehen ist, daß wenigstens ein Teil des Kühlmediums (30) als Spülmedium (36) für die Pulverzuführung (22) aus der konischen Öffnung des Ringkanals (32) austritt.

6. Vorrichtung nach Anspruch 5, **dadurch gekennzeichnet, daß** die konische Öffnung als ein- oder zweischaliger Rohrstutzen (34) ausgebildet ist.

7. Vorrichtung nach Anspruch 5 oder 6, **dadurch gekennzeichnet, daß** der Ringkanal (32) derart angeordnet und ausgebildet ist, daß eine Mittelachse desselben zur Drehachse (20) der Umlenkoptik (12) parallel, insbesondere mit der Drehachse (20) der Umlenkoptik (12) fluchtend, ausgerichtet ist.

8. Vorrichtung nach einem der Ansprüche 5 bis 7, **dadurch gekennzeichnet, daß** der Ringkanal (32) mit einer Zuführung für Spülmedium (36) verbunden ist.

9. Vorrichtung nach einem der Ansprüche 5 bis 8, **dadurch gekennzeichnet, daß** das Kühlmedium (30) ein Gas, insbesondere Luft, ist.

10. Vorrichtung nach einem der Ansprüche 5 bis 9, **dadurch gekennzeichnet, daß** die konische Öffnung derart ausgebildet ist, daß sich diese von der Umlenkoptik (12) ausgehend konisch verjüngt.

## Claims

1. Process for treating an inner surface (18) of a cylindrical bore (10), having a cylinder longitudinal axis, of a component, in particular of an aluminium cylinder crankcase of an internal combustion engine, the inner surface (18) being melted portion by portion by a laser beam (14) and an alloying powder (23), which is transported to the inner surface by means of a carrier medium, being introduced into the melted portion, the laser beam (14) being guided into the bore (10) by means of a deflecting optical system (12) and directed onto the inner surface (18) by a deflecting mirror (16), the deflecting optical system (12) and a device (22) for feeding in the alloying powder (23) being rotated and advanced into the bore (10) in such a way that a predetermined region of the inner surface (18) of the bore (10) is passed over by the laser beam (14), the deflecting mirror (16) further being cooled by a cooling medium (30), **characterized in that**, after cooling the deflecting mirror (16), at least some of the cooling medium (30) is delivered or used as an additional or exclusive flushing medium (36) for the powder feeding substantially in the direction of the inner surface (18) of the bore (10).

2. Process according to Claim 1, **characterized in that** the cooling medium removed as flushing medium is delivered annularly around the laser beam and substantially in the direction of the inner surface.

3. Process according to Claim 1 or 2, **characterized in that** the cooling medium removed is directed annularly in an annular store around the deflecting mirror.

4. Process according to Claim 1 or 2, **characterized in that** a gas, in particular air, is used as the cooling medium.

5. Apparatus for treating an inner surface (18) of a cylindrical bore (10), having a cylinder longitudinal axis, of a component, in particular of an aluminium cylinder crankcase of an internal combustion engine, with a powder feed (22), a laser emitting a laser beam (14), a deflecting optical system (12), guiding the laser beam (14) into the bore (10), and a deflecting mirror (16), directing the laser beam (14) onto the inner surface (18) and arranged at an end of the deflecting optical system (12) remote from the laser, the deflecting optical system (12) being formed in such a way as to be rotatable with respect to the bore (10) about the cylinder longitudinal axis as the axis of rotation (20), and the deflecting mirror (16) being connected to a cooling device (28) flowed through by a cooling medium (30), **characterized in that** the deflecting mirror (16) is surrounded by an annular channel (32), which has at a point of emergence of the laser beam (14) from the deflecting optical system (12) a conical opening surrounding the laser beam (14), a fluid-conducting connection being provided between the cooling device (28) of the deflecting mirror (16) and the annular channel (32) in such a way that at least some of the cooling medium (30) emerges from the conical opening of the annular channel (32) as a flushing medium (36) for the powder feed (22).

6. Apparatus according to Claim 5, **characterized in that** the conical opening is formed as a one-shell or two-shell pipe connecting piece (34).

7. Apparatus according to Claim 5 or 6, **characterized in that** the annular channel (32) is arranged and formed in such a way that a centre axis of the same is aligned parallel to the axis of rotation (20) of the deflecting optical system (12), in particular in line with the axis of rotation (20) of the deflecting optical system (12).

8. Apparatus according to one of Claims 5 to 7, **characterized in that** the annular channel (32) is connected to a feed for flushing medium (36).

9. Apparatus according to one of Claims 5 to 8, **characterized in that** the cooling medium (30) is a gas, in particular air.

10. Apparatus according to one of Claims 5 to 9, **characterized in that** the conical opening is formed in such a way that it tapers conically from the deflecting optical system (12).

## Revendications

1. Procédé permettant de traiter une face intérieure (18) d'un alésage cylindrique (10) présentant un axe longitudinal de cylindre d'un composant, en particulier d'un carter de cylindre en aluminium d'un moteur à combustion interne, dans lequel la face intérieure (18) est fondue par sections à l'aide d'un rayon laser (14) et une poudre d'alliage (23) est introduite dans la section fondue, la poudre étant transportée par un agent porteur jusqu'à la face intérieure, dans lequel le rayon laser (14) est guidé au moyen d'un système optique de déviation (12) dans l'alésage (10) et dirigé par un miroir de déviation (16) sur la face intérieure (18), dans lequel le système optique de déviation (12) ainsi qu'un dispositif (22) permettant d'amener la poudre d'alliage (23) tournent et sont avancés dans l'alésage (10) de telle sorte qu'une zone prédéterminée de la face intérieure (18) de l'alésage (10) est balayée par le rayon laser (14), dans lequel en outre le miroir de déviation (16) est refroidi par un agent réfrigérant (30), **caractérisé en ce qu'**après le refroidissement du miroir de déviation (16), au moins une partie de l'agent réfrigérant (30) est enlevée ou utilisée comme agent épurateur (36) supplémentaire ou exclusif pour l'alimentation de la poudre substantiellement en direction de la face intérieure (18) de l'alésage (10).

2. Procédé selon la revendication 1, **caractérisé en ce que** l'agent réfrigérant prélevé comme agent épurateur est enlevé sous forme d'anneau autour du rayon laser et substantiellement en direction de la face intérieure.

3. Procédé selon la revendication 1 ou 2, **caractérisé en ce que** l'agent réfrigérant prélevé est guidé sous forme d'anneau dans un réservoir annulaire autour du miroir de déviation.

4. Procédé selon la revendication 1 ou 2, **caractérisé en ce que** l'on utilise un gaz, en particulier de l'air, comme agent réfrigérant.

5. Dispositif permettant de traiter une face intérieure (18) d'un alésage cylindrique (10) présentant un axe longitudinal de cylindre d'un composant, en particulier d'un carter de cylindre en aluminium d'un moteur à combustion interne, avec une alimentation de la poudre (22), un laser émettant un rayon laser (14), un système optique de déviation (12) guidant le rayon laser (14) dans l'alésage (10) et un miroir de déviation (16) dirigeant le rayon laser (14) sur la face intérieure (18), le miroir étant disposé à une extrémité du système optique de déviation (12) détournée du laser, dans lequel le système optique de déviation (12) est réalisé comme un axe de rotation (20) autour de l'axe longitudinal de cylindre de façon à pouvoir tourner par rapport à l'alésage (10), et le miroir de déviation (16) est relié à un dispositif de refroidissement (28) parcouru par un agent réfrigérant (30), **caractérisé en ce que** le miroir de déviation (16) est entouré par un canal annulaire (32) qui présente un orifice conique entourant le rayon laser (14) à un endroit où le 'rayon laser (14) quitte le système optique de déviation (12), une connexion guidant le fluide entre le dispositif de refroidissement (28) du miroir de déviation (16) et le canal annulaire (32) étant prévue de telle sorte qu'au moins une partie de l'agent réfrigérant (30) sort par l'orifice conique du canal annulaire (32) comme agent épurateur (36) pour l'alimentation de la poudre (22).

6. Dispositif selon la revendication 5, **caractérisé en ce que** l'orifice conique est réalisé comme un manchon (34) à coque simple ou double.

7. Dispositif selon la revendication 5 ou 6, **caractérisé en ce que** le canal annulaire (32) est disposé et réalisé de telle sorte qu'un axe central de celui-ci est aligné en parallèle à l'axe de rotation (20) du système optique de déviation (12), en particulier de façon affleurante avec l'axe de rotation (20) du système optique de déviation (12).

8. Dispositif selon l'une quelconque des revendications 5 à 7, **caractérisé en ce que** le canal annulaire (32) est relié à une alimentation pour l'agent épurateur (36) .

9. Dispositif selon l'une quelconque des revendications 5 à 8, **caractérisé en ce que** l'agent réfrigérant (30) est un gaz, en particulier de l'air.

10. Dispositif selon l'une quelconque des revendications 5 à 9, **caractérisé en ce que** l'orifice conique est réalisé de telle sorte qu'il s'effile de façon conique à partir du système optique de déviation (12).
